(19) Europäisches Patentamt
European Patent Office
Office européen des brevets

(11) Publication number: **0 272 422 A2**

(12) # EUROPEAN PATENT APPLICATION

(21) Application number: **87116341.6**

(22) Date of filing: **05.11.87**

(51) Int. Cl.[4]: **C08L 69/00** , C08L 67/00 , C08L 51/06 , C08K 5/34 , C08K 5/07

(30) Priority: **23.12.86 US 945605**

(43) Date of publication of application: **29.06.88 Bulletin 88/26**

(84) Designated Contracting States: **DE FR GB IT NL**

(71) Applicant: **GENERAL ELECTRIC COMPANY**
**1 River Road**
**Schenectady New York 12305(US)**

(72) Inventor: **Giles, Harold Frazee, Jr.**
**Wilshire Drive**
**Cheshire Massachusetts 01225(US)**

(74) Representative: **Sieb, Rolf, Dr.**
**General Electric - Deutschland**
**Patentabteilung Praunheimerlandstrasse 50**
**D-6000 Frankfurt/Main(DE)**

(54) **Ultraviolet radiation stabilized polycarbonate resin and interpolymer modifier blends.**

(57) A resinous composition comprising:

(i) at least one aromatic carbonate resin;

(ii) at least one interpolymer comprising crosslinked (meth)acrylate, crosslinked styrene-acrylonitrile, and uncrosslinked styrene-acrylonitrile; and

(iii) an ultraviolet radiation stabilizing effective amount of an ultraviolet radiation stabilizer comprising at least one benzotriazole derivative and at least one benzophenone derivative.

The compositions of this invention are useful in the production of extruded and molded articles. Said articles exhibit improved impact properties and improved resistance to degradation by ultraviolet radiation.

EP 0 272 422 A2

# ULTRAVIOLET RADIATION STABILIZED POLYCARBONATE RESIN AND INTERPOLYMER MODIFIER BLENDS

## BACKGROUND OF THE INVENTION

Blends of polycarbonate resins and an interpolymer modifier comprising a crosslinked (meth) acrylate, a crosslinked styrene-acrylonitrile, and an uncrosslinked styrene-acrylonitrile, are known and are disclosed in U.S. Patent No. 4,148,842. These blends exhibit many excellent properties such as better impact resistance than neat polycarbonate resin, better processability than neat polycarbonate resin, good weatherability, and good optical properties. However, these blends are highly susceptible to degradation by ultraviolet radiation with the concomitant adverse effects upon their properties, particularly discoloration such as yellowing.

It would be very advantageous if blends of polycarbonate and interpolymer could be provided which exhibited improved resistance to degradation by ultraviolet radiation. Since it is known that polycarbonate resins can be stabilized against ultraviolet radiation by the use of ultraviolet radiation stabilizers such as benzophenone derivatives, benzotriazole derivatives, cyanoacrylates, benzylidene malonates, and the like, it would initially appear that the polycarbonate/interpolymer blends may likewise be stabilized against ultraviolet radiation by the use of these same stabilizers. However, such is not the case. The use of many of these stabilizers, either alone or in combination, is either ineffective to stabilize these blends against ultraviolet radiation or ineffective to sufficiently stabilize these blends to a degree required for certain commercial applications.

It has now been discovered that the use of an ultraviolet radiation stabilizer mixture comprised of a benzophenone derivative and a benzotriazole derivative is effective in stabilizing the blends of this invention against degradation by ultraviolet radiation.

## SUMMARY OF THE INVENTION

The instant invention is directed to an ultraviolet radiation stabilized aromatic carbonate resin composition comprising:

(i) a blend comprised of

(a) at least one aromatic carbonate resin, and

(b) at least one three phase interpolymer comprising a crosslinked (meth)acrylate, a crosslinked styrene-acrylonitrile, and an uncrosslinked styrene-acrylonitrile; and

(ii) an ultraviolet radiation stabilizing effective amount of a stabilizer comprised of at least one benzophenone derivative and at least one benzotriazole derivative.

## DESCRIPTION OF THE INVENTION

In accordance with the instant invention there are provided aromatic carbonate resin compositions comprising:

(i) a blend comprised of

(a) at least one aromatic carbonate resin, and

(b) at least one three phase interpolymer comp rising a crosslinked (meth)acrylate, a crosslinked styrene-acrylonitrile, and a non-crosslinked styrene-acrylonitrile; and

(ii) an ultraviolet radiation stabilizing effective amount of an ultraviolet radiation stabilizer comprising at least one benzophenone derivative and at least one benzotriazole derivative.

These compositions are stabilized against degradation by ultraviolet radiation, i.e., they exhibit improved resistance to degradation by ultraviolet radiation.

The aromatic carbonate resins utilized in the practice of the instant invention include the polycarbonate resins and the copolyester-carbonate resins. The polycarbonate resins are conventional well known thermoplastic resins and are generally commercially available or may be readily prepared by known and conventional methods. These polycarbonates, as well as methods for thier preparation, are described, inter alia, in U.S. Patent Nos. 3,161,615; 3,220,973; 3,312,659; 3,316,660; 3,313,777; 3,666,614 and 3,393, 672, all of which are incorporated herein by reference. The polycarbonates may be prepared by a variety of

known methods, including the interfacial polymerization process which involves the coreaction of a dihydric phenol with a carbonate precursor. The aromatic polycarbonate resins contain at least one recurring structural unit represented by the general formula

I. 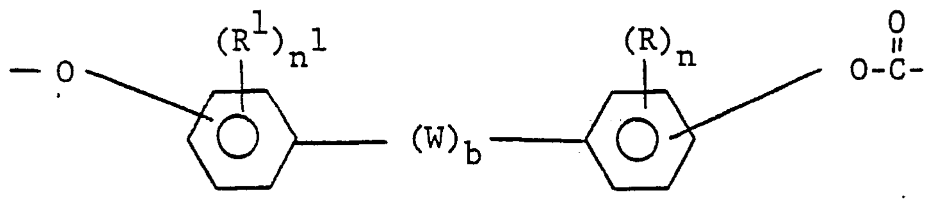

wherein:

R and $R^1$ are independently selected from monovalent hydrocarbon radicals, monovalent hydrocarbonoxy radicals, and halogen radicals;

W is selected from divalent hydrocarbon radicals,

-S-, -S-S-, -O-, $-\overset{O}{\overset{\|}{S}}-$, $-\overset{O}{\overset{\|}{S}}-$, and

$$-\overset{O}{\overset{\|}{\underset{\underset{O}{\|}}{S}}}-;$$

n and $n^1$ are independently selected from integers having a value of from 0 to 4 inclusive; and

b is either zero or one.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The preferred cycloalkyl radicals are those containing from 4 to about 8 ring carbon atoms. The preferred aryl radicals are those containing from 6 to 12 ring carbon atoms, e.g., phenyl, naphthyl, and biphenyl. The preferred aralkyl and alkaryl radicals are those containing from 7 to about 14 carbon atoms.

The preferred halogen radicals represented by R and $R^1$ are chlorine and bromine.

The monovalent hydrocarbonoxy radicals represented by R and $R^1$ may be represented by the formula $-OR^2$ wherein $R^2$ is a monovalent hydrocarbon radical of the type described hereinafore. Preferred hydrocarbonoxy radicals are the alkoxy and aryloxy radicals.

The divalent hydrocarbon radicals represented by W include the alkylene, alkylidene, cycloalkylene, and cycloalkylidene radicals. The preferred alkylene radicals are those containing from 2 to about 20 carbon atoms. The preferred alkylidene radicals are those containing from 1 to about 20 carbon atoms. The preferred cycloalkylene and cycloalkylidene radicals are those containing from 6 to about 16 ring carbon atoms.

Typically, the dihydric phenols utilized in the preparation of the polycarbonate resins may be represented by the general formula

II. 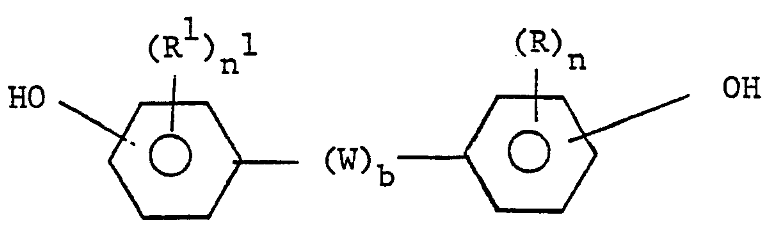

wherein R, $R^1$, n, $n^1$, W and b are as defined hereinafore.

Some illustrative non-limiting examples of dihydric phenols falling within the scope of Formula II include:

2,2-bis(4-hydroxyphenyl)propane (bisphenol-A);

2,2-bis(3,5-dibromo-4-hydroxyphenyl)propane;

2,2-bis(3,5-dimethyl-4-hydroxyphenyl)propane;

2,2-bis(3-bromo-5-methyl-4-hydroxyphenyl)propane;
1,1-bis(4-hydroxyphenyl)cyclohexane;
1,1-bis(4-hydroxyphenyl)cyclododecane;
1,1-bis(3,5-dimethyl-4-hydroxyphenyl)cyclododecane;
1,1-bis(4-hydroxyphenyl)decane;
1,4-bis(4-hydroxyphenyl)butane;
bis(4-hydroxyphenyl)methane;
4,4'-thiodiphenol; and
bis(4-hydroxyphenyl)ether.

Other dihydric phenols which are useful are described in U.S. Patent Nos. 2,998,835; 3,028,365 and 3,334,154, all of which are incorporated herein by reference.

The carbonate precursor may be a carbonyl halide, a carbonate ester, or a bishaloformate. The carbonyl halides may be carbonyl bromide, carbonyl chloride, or mixtures thereof. The carbonate esters may be diphenyl carbonate; di(halophenyl)carbonates; di(alkylphenyl) carbonates; and the like. The bishaloformates that can be used include the bishalformates of dihydric phenols such as the bischloroformates of bisphenol-A and hydroquinone; and the bishaloroformates of glycols such as bischloroformates of ethylene glycol, neopentyl glycol, and polyethylene glycol. The preferred carbonate precursor is carbonyl chloride, also known as phosgene.

Also included within the term polycarbonates are the randomly branched thermoplastic polycarbonates wherein a branching agent, which is generally a polyfunctional organic compound, preferably a polyfunctional aromatic compound, is reacted with the dihydric phenol and the carbonate precursor. These polyfunctional branching agents are used in minor amounts, i.e. amounts effective to provide branching, and contain at least three functional groups which may be hydroxyl, carboxyl, carboxylic anhydride, haloformyl, and mixtures thereof. Some illustrative non-limiting examples of these compounds include trimellitic anhydride, trimellitic acid, 4-chloroformyl phthalic anhydride, pyromellitic acid, pyromellitic dianhydride, mellitic acid, mellitic anhydride, trimesic acid, and benzophenonetetracarboxylic acid.

The copolyester-carbonate resins are also well known in the art and are described, along with methods for their preparation, in U.S. Patent Nos. 3,169,121; 4,238,596; 4,156,069 and 4,238,597, all of which are incorporated herein by reference.

Briefly stated, the high molecular weight thermoplastic aromatic copolyester-carbonate resins comprise recurring carbonate groups, carboxylate groups, and aromatic carbocyclic groups in the polymer chain in which at least some of the carbonate groups and at least some of the carboxylate groups are bonded directly to the ring carbon atoms of the aromatic carbocylcic groups. These copolyester-carbonates contain ester bonds and carbonate bonds in the chain, wherein the amount of ester bonds is in the range of from about 25 to about 90 mole percent, preferably from about 35 to about 80 mole percent. For example, 5 moles of bisphenol-A reacting completely with 4 moles of isophthaloyl dichloride and one mole of phosgene would give a copolyester-carbonate of 80 mole percent ester bonds.

These copolyester-carbonates may be readily prepared by the interfacial polymerization process by the reaction of (1) at least one dihydric phenol, (2) a carbonate precursor, and (3) an ester precursor. The dihydric phenols and the carbonate precursors are of the type described hereinafore. The ester precursor may be a difunctional carboxylic acid or, preferably, its ester forming reactive derivative such as a diacid halide, e.g., isophthaloyl dichloride, terephthaloyl dichloride, or mixtures thereof. Some useful difunctional acids are set forth in U.S. Patent No. 3,169,121, incorporated herein by reference. Particularly useful difunctional acids are the aromatic dicarboxylic acids such as isophthalic acid, terephthalic acid and mixtures thereof. Quite useful ester forming derivatives of these aromatic dicarboxylic acids are isophthaloyl dichloride, terephthaloyl dichloride, and mixtures thereof. Quite useful mixtures of isophthaloyl dichloride and terephthaloyl dichloride are those containing a weight ratio of isophthaloyl dichloride to terephthaloyl dichloride of from about 10:0.2 to about 1:10.

The interpolymer which forms the second component of the instant polycarbonate/interpolymer blends is well known and is described in U.S. Patent No. 3,944, 631 to A. J. Yu et al, incorporated herein by reference. This interpolymer is comprised of three phases, i.e., a cross(linked)acrylate phase, a crosslinked styrene-acrylonitrile phase, and a non-crosslinked styrene-acrylonitrile phase. These interpolymers are formed by the following type of three-step sequential polymerization process:

1. Emulsion polymerizing a monomer charge (herein designated "(meth)acrylate" for purposes of the present invention) of at least one $C_2$-$C_{10}$ alkyl acrylate, $C_8$-$C_{22}$ alkyl methacrylate, or compatible mixtures thereof, in an aquesous polymerization medium in the presence of an effective amount of a suitable di-or polyethylenically unsaturated crosslinking agent for such type of monomer, with the $C_4$-$C_8$ alkyl acrylates being the preferred (meth)acrylate monomers for use in this step;

2. Emulsion polymerizing a monomer charge of styrene and acrylonitrile in an aqueous polymerization medium, also in the presence of an affective amount of a suitable di-or polyethylenically unsaturated crosslinking agent for such monomers, said polymerization being conducted in the presence of the product from Step 1 so that the crosslinked (meth) acrylate and cross-linked styrene-acrylonitrile components form an interpolymer wherein the respective phases interpenetrate one another; and

3. Either emulsion or suspension polymerizing a monomer charge of styrene and acrylonitrile, in the absence of a crosslinking agent, in the presence of the product resulting from Step 2. If desired, Steps 1 and 2 can be reversed in the described procedure.

This product, which is used as the interpolymer in the blends of the instant invention, generally comprises from about 5% to about 50%, by weight, of at least one of the above-identified crosslinked (meth)acrylates, from about 5% to about 35%, by weight, of the crosslinked styrene-acrylonitrile component, and from about 15% to about 90%, by weight, of the uncrosslinked styrene-acrylonitrile component. It contains little if any graft polymerization between the styrene-acrylonitrile copolymer components and the crosslinked (meth)acrylate component. Further details regarding this type of polymer composition can be found in U.S. Patent No. 3,944,631 to A.J. Yu et al., which is incorporated herein by reference.

Blending or mixing of the aforementioned polycarbonate resin and the interpolymer can be effected by any of the well-known polymer blending processes, such as two-roll or Banbury milling, single or multiple screw extrusions, or any other method which applies sufficient heat and shear to the respective polymeric ingredients (polycarbonate resin and interpolymer) to obtain a satisfactory blend in accordance with the present invention.

Generally, the instant blends contain weight ratios of aromatic carbonate resin to interpolymer of from about 95:5 to about 5:95; preferably from about 80:20 to about 20:80; and more preferably from about 60:40 to about 40:60. Quite useful blends are those that contain a 50:50 weight ratio of aromatic carbonate resin, particularly aromatic polycarbonate resin, to three phase interpolymer.

The ultraviolet radiation stabilizer is comprised of a mixture of at least one benzophenone derivative and at least one benzotriazole derivative. The benzophenone derivatives are well known in the art and are generally commercially available of may be readily prepared by known methods. They are described, inter alia, in U.S. Patent No. 3,043,709, incorporated herein by reference.

These benzophenone derivatives may be represented by the general formula

III. 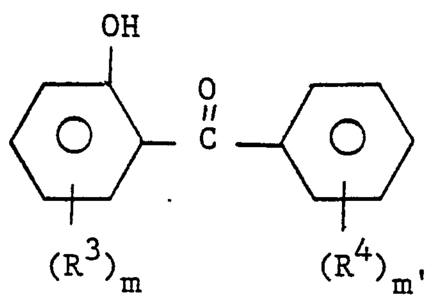

wherein:

$R^3$ and $R^4$ are independently selected from alkyl, alkoxy, hydroxyl, and halogen radicals; and

m and m′ are independently selected from positive integers having a value of from 0 to 4, inclusive.

The alkyl radicals represented by $R^3$ and $R^4$ include both the straight chain and the branched alkyl radicals. Preferred alkyl radicals are those containing from 1 to about 12 carbon atons. The alkoxy radicals represented by $R^3$ and $R^4$ may be represented by the formula $-OR^5$ wherein $R^5$ is an alkyl radical of the type described for $R^3$ and $R^4$ above. The preferred halogen radicals are chlorine and bromine.

Preferred benzophenone derivatives of Formula III are those wherein the sum of m plus m′ is at least one. Of these, the preferred compounds are those represented by the following formula

IIIa. 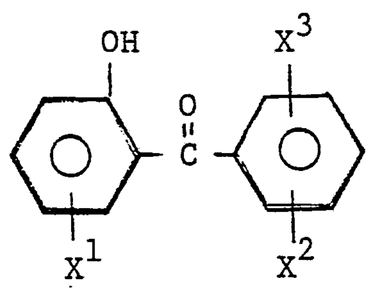

wherein $X^1$-$X^3$ are independently selected from hydrogen, alkyl radicals, alkoxy radicals, hydroxy radicals, and halogen radicals. The alkyl and alkoxy radicals represented by $X^1$-$X^3$ are the same as those defined for $R^3$ and $R^4$ hereinafore.

Some illustrative non-limiting examples of suitable derivatives of benzophenone include:

2-hydroxy-4-n-octyloxybenzophenone;
2,2′-dihydroxybenzophenone;
2,2′,4,4′-tetrahydroxybenzophenone;
2,2′-dihydroxy-4,4′-dimethoxybenzophenone;
2,2′-dihydroxy-4,4′-diethyoxybenzophenone;
2,2′-dihydroxy-4,4′-n-octyloxybenzophenone;
2-hydroxy-4,4′,6′-tributoxybenzophenone;
2,4-dihydroxybenozphenone;
2-hydroxy-4-methoxybenzophenone;
2-hydroxy-4-butoxybenzophenone;
2-hydroxy-4-pentoxybenzophenone;
2-hydroxy-4-methoxy-4′-propylbenzophenone;
1-hydroxy-4-methoxy-2′-chlorobenzophenone;
2-hydroxy-4-ethoxy-4′-bromobenzophenone;
2,2′-dihydroxy-4-ethoxy-4′-propoxybenzophenone;
2-hydroxy-4-ethoxy-2′4′-dibutylbenzophenone; and
2-hydroxy-4-propoxy-4′,6′-dibromobenzophenone.

The benzotriazole derivatives which form the second component of the instant ultraviolet radiation stabilizer are likewise well known compounds which are generally commercially available or may be readily prepared by known and conventional methods. These benzotriazole derivative may be represented by the general formula

IV. 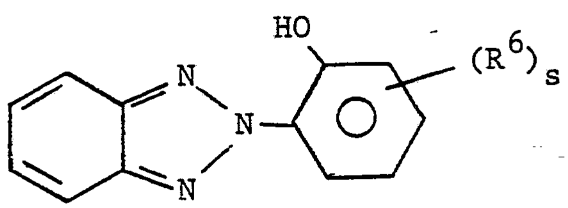

wherein:

$R^6$ is independently selected from alkyl radicals, $NO_2$ radicals, alkoxy radicals, and hydroxy radicals; and s is an integer having a value of from 0 to 4 inclusive.

The alkyl radicals and alkoxy radicals represented by $R^6$ are the same as those defined for $R^3$ and $R^4$ hereinafore.

Preferred benzotriazole derivatives represented by Formula IV are those having the general formula

IVa. 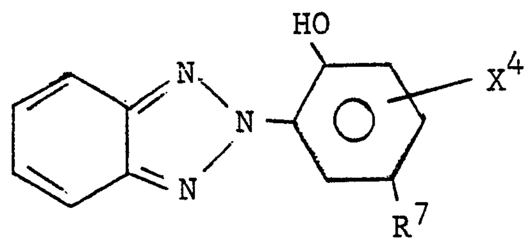

wherein:

$R^7$ is selected from alkyl radicals or alkoxy radicals; and

$X^4$ is either hydrogen or the $NO_2$ radical.

The preferred benzotriazole derivatives of Formula IVa are those wherein $R^7$ is an alkyl radical.

Some illustrative non-limiting examples of the benzotriazole derivatives include:

2-(2′-hydroxy-5′-methylphenyl)benzotriazole;
2-(2′-hydroxy-5′-t-octylphenyl)benzotriazole;
2-(2′ hydroxy-5′-propylphenyl)benzotriazole;
2-(2′-hydroxy-5′-propoxyphenyl)benzotriazole;
2-(2′-hydroxy-3′-nitro-5′-methylphenyl)benzotriazole; and
2-(2′-hydroxy-5′-n-octylphenyl)benzotriazole.

Some other examples of benzophenone derivatives and benzotriazole derivatives are described in U.S. Patent Nos. 3,309,220; 3,049,443 and 2,976,259, all of which are incorporated herein by reference.

The ultraviolet radiation stabilizer of the instant invention may contain a weight ratio of the benzophenone to benzotriazole from about 5:1 to about 1:5, preferably from about 3:1 to about 1:3, and more preferably from about 2:1 to about 1:2.

The amount of ultraviolet radiation stabilizer present in the instant compositions is an ultraviolet radiation stabilizing effective amount. That is to say, an amount of ultraviolet radiation stabilizer effective to stabilize the instant compositions against degaradation by ultraviolet radiation, i.e., improve the ultraviolet radiation stability of the polycarbonate/interpolymer blends. Generally this amount is at least about 0.1 weight percent, preferably at least about 0.5 weight percent. Weight percent of ultraviolet radiation stabilizer is based on the amounts, in weight, of the aromatic carbonate polymer/interpolymer and ultraviolet radiation stabilizer present in the instant compositions. Generally the amount of ultraviolet radiation stabilizer present should not exceed about 7 weight percent, preferably about 3 weight percent, and more preferably about 2 weight %.

The compositions of the instant invention may optionally contain the other well known and conventionally used additives for aromatic carbonate resins such as: antioxidants; mold release agents; fillers such as glass (chopped fiberglass and glass particles), clay, talc, silica gel, carbon black, etc.; color stabilizers such as the organophosphites; hydrolytic stabilizers such as the epoxides; and flame retardants. Some useful flame retardants are the alkali and alkaline earth metal salts of organic sulfonic acids. These types of flame retardants are disclosed, inter alia, in U.S. Patent Nos. 3,933,734; 3,931,100; 3,978,024; 3,948,851; 3,926,908; 3,919,167; 3,909,490; 3,953,396; 3,953,399; 3,917,559 and 3,940,366, all of which are incorporated herein by reference.

If the instant compositions optionally contain an inorganic filler such as glass it is generally preferred that the amount of filler not exceed about 50 weight %, preferably about 30 weight percent, based on the total amounts of filler and aromatic carbonate resin/interpolymer blends present.

The compositions of the instant invention may also optionally contain various additional well known and conventional impact modifiers. These conventional impact modifers include, but are not limited to those described in U.S. Patent No. 4,512,980 to Miller, incorporated herein by reference.

## DESCRIPTION OF THE PREFERRED EMBODIMENT

The following examples are presented to further illustrate the present invention. They are presented by way of illustration and not by way of limitation. In the examples all parts and percentages are on a weight basis unless otherwise indicated.

The following examples illustrate compositions falling outside the scope of the instant invention. They are presented for comparative purposes only.

EXAMPLE 1

This example illustrates a neat three-phase interpolymer containing 1 part by weight per hundred parts by weight of resin of 2-(2′-hydroxy-5′-methylphenyl)benzotriazole.

100 parts by weight of a three-phase interpolymer comprising 30 weight % of cross-linked butyl acrylate, 10 weight % of cross-linked styrene-acrylonitrile, and 60 weight percent of non-crosslinked styrene-acrylonitrile, is mixed with 1 part by weight of 2-(2′-hydroxy-5′-methylphenyl)benzotriazole. The resultant mixture is molded into test panels and the test panels are subjected for a period of 3,000 hours to the QUV accelerated weathering test. The ΔE of these test panels is determined after 500 hours exposure to weathering and after 3,000 hours exposure to weathering and the results are set forth in Table I.

In the QUV accelerated weathering test the test samples are inserted into a QUV accelerated weathering device sold by the Q-Panel Company. This device is set to alternating consecutive cycles of fluorescent ultraviolet light at 70°C. for 8 hours and high humidity at 50°C. for 4 hours.

The ΔE or total color difference is the magnitude of the resultant vector of three component differences:
lightness-index difference, ΔL,
chromaticity-index difference, $\Delta a_L$,
chromaticity-index difference, $\Delta b_L$.
The total magnitude of color difference, E, is a scalar quantity and may be computed from the equation

$$\Delta E = \sqrt{(\Delta L)^2 + (\Delta a_L)^2 + (\Delta b_L)^2}$$

EXAMPLE 2

Fifty parts by weight of the interpolymer/UV stabilizer mixture of Example 1 are admixed with 50 parts by weight of an aromatic polycarbonate resin (derived from bisphenol-A and phosgene). The resultant mixture contains about 0.5 weight percent of said 2-(2′-hydroxy-5′-methylphenyl)benzotriazole. The resin mixture is molded into test panels and the test panels are subjected to the QUV accelerated weathering test as in Example 1. The ΔE is determined and the results are set forth in Table I.

EXAMPLE 3

The procedure of Example 2 is substantially repeated except that to the mixture of Example 2 there are added 0.25 parts by weight per hunderd parts by weight of resin blend of 2,4-di-5-butylphenyl-3,5-di-t-butyl-4-hydroxybenzoate.

The ΔE of test samples fabricated from this mixture is determined and the results are set forth in Table I.

EXAMPLE 4

The procedure of Example 2 is substantially repeated except that to the mixture of Example 2 there are added 0.50 parts by weight per hundred parts by weight of resin blend of 2-[hydroxy-5-t-octylphenyl] benzotriazole.

The ΔE of test samples fabricated from this mixture is determined and the results are set forth in Table I.

EXAMPLE 5

The procedure of Example 2 is substantially repeated except that to the mixture of Example 2 there are added 0.25 parts by weight per hundred parts by weight of resin blend of 2-[hydroxy-5-t-octylphenyl] benzotriazole.

The ΔE of test samples fabricated from this mixture is determined and the results are set forth in Table I.

The following example illustrates the compositions of the instant invention.

EXAMPLE 6

The procedure of Example 2 is substantially repeated except that to the mixture of Example 2 there are added 0.25 parts by weight per hundred parts by weight of resin blend of 2-hydroxy-4-n-octylbenzophenone.

The ΔE of test samples fabricated from this mixture is determined and the results are set forth in Table I.

TABLE I

| Example No. | ΔE (hours exposure) 500 | ΔE (hours exposure) 3,000 |
|---|---|---|
| 1 | 3.7 | 7.9 |
| 2 | 7.2 | 10.3 |
| 3 | 12.4 | 9.4 |
| 4 | 7.9 | 7.6 |
| 5 | 7.8 | 10.1 |
| 6 | 5.6 | 6.8 |

As illustrated by the data in Table I the polycarbonate/interpolymer blends containing the particular ultraviolet radiation stabilizers of the instant invention (Example 6), exhibit better ΔE as compared with polycarbonate/interpolymer blends containing only a benzotriazole UV stabilizer (Examples 2 and 4-5) or a combination of a benzotriazole and a hydroxybenzoate UV absorber (Example 3).

Obviously, other modifications and variations of the present invention are possible in light of the above teachings. It is, therefore, to be understood that changes may be made in the particular embodiments of the invention described which are within the full intended scope of the invention as defined by the appended claims.

**Claims**

1. A resinous composition comprising:

(i) at least one aromatic carbonate resin:

(ii) at least one interpolymer comprising crosslinked (meth)acrylate, crosslinked styrene-acrylonitrile, and uncrosslinked styrene-acrylonitrile; and

(iii) an ultraviolet radiation stabilizing effective amount of an ultraviolet radiation stabilizer comprising at least one benzotriazole derivative and at least one benzophenone derivative.

2. The composition of claim 1 wherein said interpolymer (ii) comprises from about 5% to about 50%, by weight, of the (meth)acrylate, from about 5% to about 45%, by weight, of the crosslinked styrene-acrylonitrile, and from about 15% to about 90%, by weight, of said uncrosslinked styrene-acrylonitrile.

3. The composition of claim 2 wherein said (meth)acrylate is selected from the crosslinked $C_2$-$C_{10}$ alkyl acrylates, crosslinked $C_8$-$C_{22}$ alkyl methacrylates, or comptabile mixtures thereof.

4. The composition of claim 1 wherein said benzophenone derivative is represented by the general formula

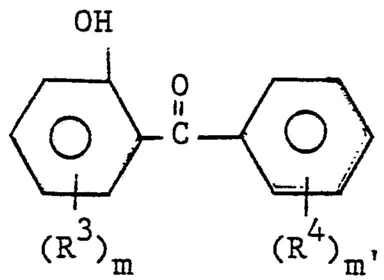

wherein:

$R^3$ and $R^4$ are independently selected from alkyl, alkoxy, hydroxyl, or halogen radicals; and

m amd m′ are independently selected from integers having a value of from 0 to 4 inclusive.

5. The composition of claim 5 wherein said benzophenone derivative is represented by the formula

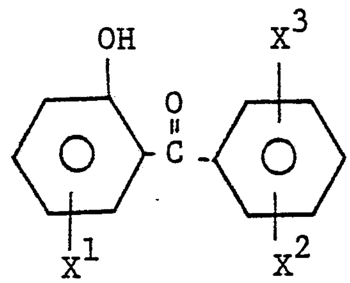

wherein:

$X^1$, $X^2$ and $X^3$ are independently selected from hydrogen, alkyl radicals, alkoxy radicals, hydroxy radicals, or halogen radicals.

6. The composition of claim 1 wherein said benzotriazole derivatives are represented by the general formula

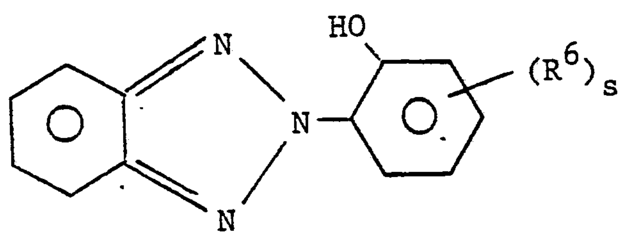

wherein:

$R^6$ is independently selected from alkyl radicals, $NO_2$ radicals, alkoxy radicals, or hydroxy radicals: and

s is an integer having a value of from 0 to 4 inclusive.

7. The composition of claim 6 wherein said benzotriazole derivatives are represented by the formula

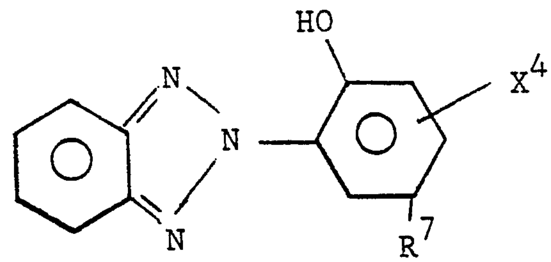

wherein:

$R^7$ is selected from alkyl radicals or alkoxy radicals; and

$X^4$ is either hydrogen or the $NO_2$ radical.

8. The composition of claim 1 wherein said effective amount of (iii) is at least about 0.1 weight percent, based on the total amounts of (i)-(iii) present.

9. The composition of claim 8 wherein said effective amount of (iii) is at least about 0.5 weight percent.

10. The composition of claim 1 which contains a weight ratio of (i) to (ii) of from about 95:5 to about 5:95.

11. The composition of claim 10 which contains a weight ratio of (i) to (ii) of from about 80:20 to about 20:80.

12. The composition of claim 11 which contains a weight ratio of (i) to (ii) of from about 40:60 to about 60:40.

13. The composition of claim 12 which contains a weight ratio of (i) to (ii) of about 50:50.

14. The composition of claim 1 wherein said aromatic carbonate resin is selected from aromatic polycarbonate resins, aromatic copolyester-carbonate resin, or mixtures thereof.

15. The composition of claim 14 wherein said aromatic carbonate resin is an aromatic polycarbonate resin.

16. The composition of claim 15 wherein the weight ratio of said aromatic polycarbonate resin to said interpolymer is about 50:50.

17. The composition of claim 16 wherein said benzotriazole derivative is 2-(2′-hydroxy-5′-methylphenyl) benzotriazole.

18. The composition of claim 17 wherein said benzophenone derivative is 2-hydroxy-4-n-octyloxybenzophenone.

19. The composition of claim 14 wherein said aromatic carbonate resin is selected from copolyester-carbonate resins.

20. The composition of claim 14 wherein said aromatic carbonate resin is a mixture of at least one aromatic polycarbonate resin and at least one aromatic copolyester-carbonate resin.

21. The composition of claim 1 which further contains a flame retardant amount of at least one flame retardant compound.

22. The composition of claim 21 wherein said flame retardant compound is selected from the alkali and alkaline earth metal salts of organic sulfonic acids.